Europäisches Patentamt

European Patent Office

Office européen des brevets

(19)

(11) EP 1 353 518 A1

(12) **EUROPEAN PATENT APPLICATION**

(43) Date of publication:
**15.10.2003 Bulletin 2003/42**

(51) Int Cl.⁷: $H04N\ 13/00$

(21) Application number: **02425218.1**

(22) Date of filing: **09.04.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **STMicroelectronics S.r.l.
20041 Agrate Brianza (Milano) (IT)**

(72) Inventors:
• **Curti, Salvatore
90135 Palermo (IT)**
• **Sirtori, Daniele
20132 Milano (IT)**

(74) Representative: **Bosotti, Luciano et al
c/o Buzzi, Notaro & Antonielli d'Oulx Srl,
Via Maria Vittoria, 18
10123 Torino (IT)**

(54) **Process and system for generating stereoscopic images from monocular images**

(57)     To generate, from at least on monocular image (12), at least one image with stereoscopic effect (18, 20), a depth map is provided (14) of said monocular image (a). The depth map in question defines a mapping of the objects present in the monocular image in relation to their spatial position in the direction of depth. For the pixels included in the monocular image and as a function of the depth map, respective parallax values are determined (16) indicative of a respective quantity of movement by which each pixel must be moved in the image with stereoscopic effect (18, 20) in relation to the monocular image (12). A movement corresponding to the respective quantity thus defined is then applied to the pixels of the monocular image (12), if necessary dividing it between two images of a stereoscopic pair (18, 20). Post-processing (22) of the image generated is also envisaged, to eliminate artifacts such as superimposed areas between moved pixels, a lateral edge of the image or gaps between objects included in said image generated as a result of the aforesaid movement of pixels.

Fig_6

EP 1 353 518 A1

**Description**

Field of the invention

The present invention relates to the art of stereoscopic vision, and in particular tackles the problem of reconstructing the stereoscopic vision of objects from the availability of monocular vision of these objects and the relative depth map.

When a photograph is acquired, for example using a camera, the photo provides a two-dimensional image of the scene in which the depth information and distance between objects (or the different regions of the scene) are not present. By looking at these two-dimensional images, an observer may virtually reconstruct the depth information through previously acquired knowledge of the world represented in this photo.

Various factors come into play in this reconstruction mechanism, such as retinal disparity, parallax and interaxial distance.

The concept of retinal disparity can be easily understood with reference to a simple experiment: hold the thumb of one hand in front of your face and observe it.

When observation is concentrated on the thumb, the eyes of the observer converge on this thumb, so that the optical axes of both eyes go through the thumb. Various muscles of the head move the eyes to obtain this result, arranging the images of the thumb on each fovea or central part of each retina. If, continuing to make the eyes converge on the thumb, the background is observed, it is seen that the background seems to double.

However, if the eyes are concentrated on the background, the eyes converge on the background and it is now the thumb that is seen with a double image.

If the images that form on the retina of the right eye and on the retina of the left eye could be taken and superimposed, approximately the same scene would be obtained almost superimposed (right and left perspective view points), and the difference between these images is called "disparity". Disparity is the distance, in a horizontal direction, between the corresponding right and left points of the superimposed retinic images. The corresponding points of the retinal images of an object on which the eyes are converged have zero disparity.

For further information on the principles and criteria at the basis of stereoscopic vision it is useful to refer to the website http://iglasses.weirdoz.org/docs/handbook.pdf corresponding to the Stereographic Developers' Handbook.

Retinal disparity is caused by the fact that each eye sees the world from a different view point. Eyes are, on average in adults, spaced apart by about 64 mm (this distance between the right and left eyes is called base line or interocular distance).

Disparity is processed by the eye-brain system into a single image of the visual world. The capacity of the mind to unite two different images, even if similar, into one single image is called fusion, and the resulting sense of depth is called stereopsis.

Other important concepts in order to understand the mechanism of stereoscopic vision are parallax and disparity. These are similar entities, with the difference given by the fact that the parallax is measured on the screen and the disparity is measured on the retina. It is the parallax that produces retinal disparity and the disparity in turn which produces stereopsis. Parallax may also be given in terms of angular measurements, which connects it to the disparity considering the distance of the observer from the viewing screen. Parallax is an important entity, as it produces the stereoscopic sense of depth.

The different types of parallax that can be encountered when observing a viewing screen are classified hereunder.

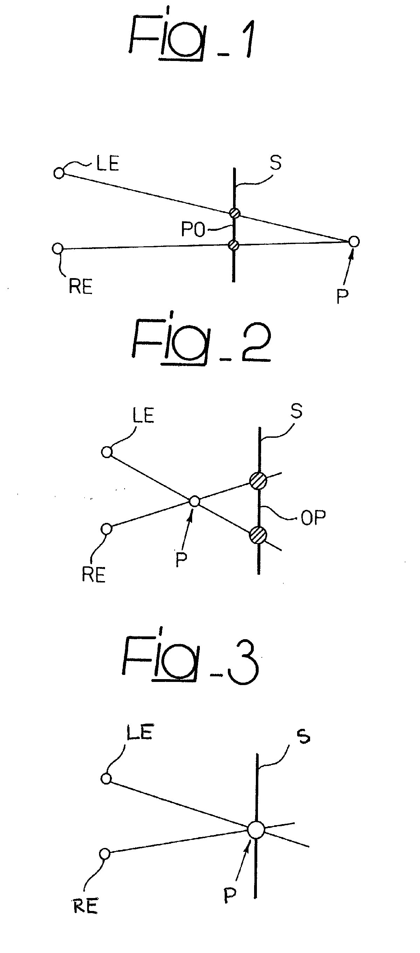

In the case in which the object is behind the projection plane the conditions represented in figure 1 are found.

In this figure, the point to project, indicated with P, if found "behind" the projection plane S, or on the opposite side in relation to the left and right eyes, indicated with LE and RE respectively.

Projection for the left eye LE is to the left and projection for the right eye RE is to the right. The distance between the right and left projections of the eye is called horizontal parallax PO. As the projections are found on the same side as the eyes, it is called positive parallax. The maximum positive parallax PO is obtained when the object is infinite. At this point, the horizontal parallax PO is equal to the base line or interocular distance.

If the object or point to project P is positioned further forward in relation to the projection plane S the conditions represented in figure 2 are produced. Projection for the left eye LE is to the right and projection for the RE eye is to the left. In this case conditions of negative horizontal parallax OP are found. A negative horizontal parallax OP equal to the base line or interocular distance is obtained when the object is at a distance equal to half the distance between the projection plane S and the centre of the axis of the eyes. When the object moves towards the observer the negative horizontal parallax OP increases infinitely.

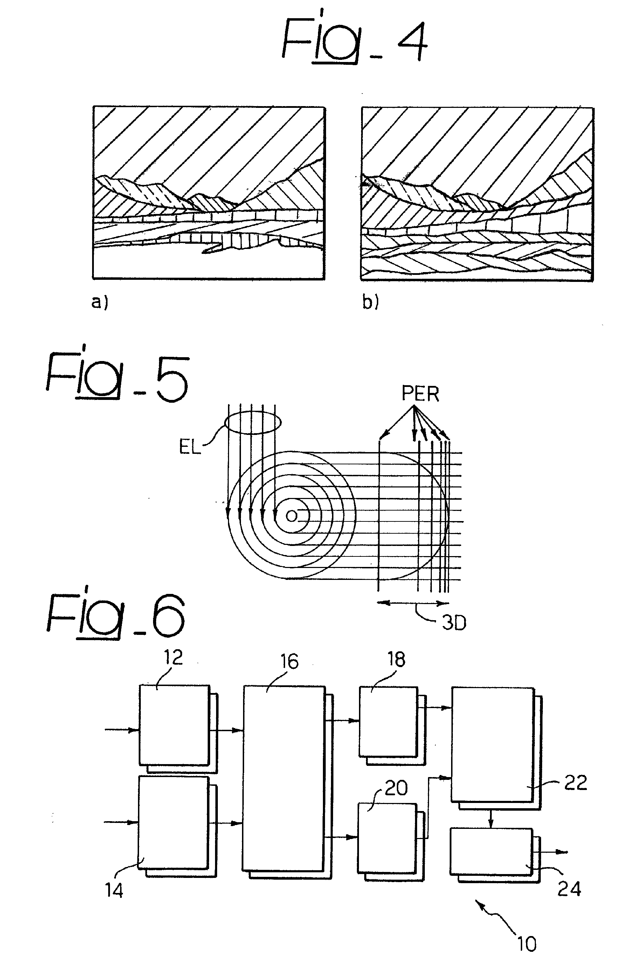

If an object is on the projection plane S (figure 3), relative projection on the focal plane coincides for both the left LE and right RE eyes. The homologous points of the two images correspond exactly or are one on top of the other. When the eyes of the observer are looking at the viewing screen S (or the eyes converge on the plane of the screen) images are being observed with zero parallax.

In this case too, for more detailed information reference can be made to the website http://astronomy.swind.edu.au/pbourke/stereographics/st ereorender and in particular to the Calculating Stereo Pairs section.

The distance between the objectives used to take a stereoscopic photograph is called interaxial distance, as regards the axes of the lenses. The axis of the objective is the line that can be drawn through the optic centre of the objective and is perpendicular to the plane of the surface on which the image is formed.

Whether this is a real objective or the construction of an objective is being used to generate an image generated by the computer, the concept is the same. If the objectives are near, the stereoscopic effect of depth is reduced. In the extreme case in which the two objectives (and axes) coincide, the final result is a planar image. By increasing the distance between the objectives, both the parallax and the stereoscopic effect increase. In this regard reference may again be made to the Stereographic Developers' Handbook website, mentioned above.

In general the interaxial distance may be considered as coinciding with the interocular distance when the eye is considered as an image acquiring system.

Description of the prior art

In numerous applicative contexts (for example in medicinal and scientific, physical and constructional applications, and in the entertainment, information and education sectors) there is an interest to produce, as a characterizing element for viewing, a three-dimensional effect, in particular obtaining this effect on a viewing device, such as a screen of various types, which itself has two-dimensional or, at least, substantially two-dimensional properties.

For example, WO-A-01/39512 describes a device destined to convert a two-dimensional video image into a three-dimensional video image. The device comprises means to correct the parallax of each area calculated by means to calculate the parallax on the basis of the magnitude of a moving vector. This solution is used to avoid the disadvantage caused by the fact that the stereoscopic sense of the video signal obtained by conversion is strongly influenced, with the same input video signal, as a function of the criteria employed to convert the video signal. In particular, the document in question refers to prior art procedures such as MTD (Modified Time Difference) and CID (Computed Image Depth). When a depth estimate is converted into a parallax, the estimate in question is subjected to a conversion of the distances scale so as to suppress the distortion of the image resulting from conversion and to determine, at least at tentative level, a target phase for each calculation area of the parallax. A dynamic field is identified in which the differences in phase between the parallax calculation areas are within an admissible change of distortion, producing a conversion of the distances scale, also determining, again at tentative level, a target phase and repeating this processing sequence.

In more generic terms, the general problem linked to these conversion or construction techniques is given by the need to reconstruct the correct retinal disparity of the objects present in the scene, on the basis of the interaxial distance of the observer and the desired parallax effect.

Objects and summary of the present invention

The object of the invention is thus to provide a solution for the generation of stereoscopic images from monocular images capable of giving rise to extremely satisfactory results from the viewpoint of quality. All this giving rise to a processing system architecture that allows easy implementation at a physical level, in particular at the level of hardware devices.

According to the present invention, this object is attained thanks to a process with the characteristics indicated specifically in the claims hereunder.

The invention also relates to the relative system.

In brief, in the currently preferred embodiment, the solution according to the invention allows the generation of the stereoscopic pair from a single source image of the monocular type and from the relative depth information.

This image or depth map is an image with levels of grey (for example with values from 0 to 255 - therefore on eight bits), which represents the depth of each object within the source image. The conjunction of the source image and the depth map allow reconstruction of the binocular view, thus producing a three-dimensional effect.

A final filtering treatment makes it possible to solve the "occlusions", generated by introducing the parallax effect, without however introducing visible and/or bothersome artefacts.

This process is preferably performed on the basis of all the three-dimensional coordinates of the objects inside the image.

Each object, each dot, each figure is then identified, divided, separated, calculated and so on, also knowing the parameters of the acquisition system (for example the parameters of the camera or television camera).

These data can be used to reconstruct the world in three dimensions with the real distance between objects, their occlusions and reproduction of the distortions of these objects.

The lack of the specific information described above is solved by the availability of the aforesaid depth map.

In the currently preferred embodiment, the solution according to the invention envisages the performance of three classes of operations: acquisition, reconstruction (or processing) and viewing.

With regard to the acquisition phase, the solution according to the invention is susceptible to prescind from the input information referring to the concept of the depth map, which is susceptible to provide at least the form, the position of the objects and the relative depth in the scene.

In the reconstruction phase all the information input into the system is processed, the right and left views are generated, the problems of occlusion and superimposition between different objects caused by the introduction of the parallax are solved, the best conditions of distance from the screen for the user to obtain ideal vision of the three-dimensional effect are suggested.

All this taking account of two important elements, namely independence from the different quality and content of the depth map input into the system, and lastly the effect of depth perception selected by the user.

In the viewing phase it is possible to select the type of three-dimensional format to be produced.

By way of an example, this selection may include the choice of anaglyphs.

This derives mainly from the fact that three-dimensional vision depends heavily on the viewing technology used: holographic, stereoscopic, volumetric and so on.

Use of an anaglyph has the advantage of allowing an easy and low cost solution to the problem, even in the case in which reproduction is performed on a paper medium.

Brief description of the accompanying drawings

The invention shall now be described, purely as a non-limiting example, with reference to the accompanying drawings, in which:

- Figures 1 to 3, relative to definition of the concept of parallax, have already been described,
- Figure 4, divided into two portions indicated with a and b respectively, represents two possible examples of depth maps,
- Figure 5 is a diagram illustrating the perception of the sense of depth,
- Figure 6 illustrates, in the form of a block diagram, the possible architecture of a system according to the invention,
- Figure 7 illustrates, again in the form of a block diagram, a possible architecture of a system for calculating the parallax,
- Figures 8 and 9 illustrate in greater detail the relative calculation geometry; in particular figure 9 illustrates the geometry in the case in which the images of the stereoscopic pair are constructed taking account of the original view point, or the view point at the time of acquisition of the monocular image, exactly in the centre in relation to the new view points, thus requiring the parallax to be distributed in equal parts between the two final images of the stereoscopic pair.
- Figure 10 illustrates the mechanism for moving data to the left and right as a function of the parallax values allocated to the pixels treated and the consequent presence of black lateral bars (due to the lack of real data) in the positions opposite to the movement implying reduction in the dimension of the image.

- Figures 11 and 12 illustrate the aforesaid movement mechanism in the regions inside the final image, in particular where there is the need to manage problems relative to reconstruction and superimposition, while solving the occlusions,
- Figure 13 illustrates the upper and lower limits of the parallax quantity admissible by the human vision system,
- Figures 14 and 15 illustrate further geometries relative to calculation of the parallax,
- Figure 16 illustrates the area of application of the monotone function in defining the depth as a function of the parallax,
- Figures 17 and 18 illustrate different monotone orientations in the choice of possible functions in the area described by figure 16 above,
- Figure 19 illustrates, relative to a possible orientation, the ratio with the scale of possible values (from 0 to 255) of permitted depth levels, and
- Figure 20 illustrates, for comparison, an original two-dimensional image (a), the relative depth map (b) and corresponding anaglyphs (c to h) generated according to the invention.

Detailed description of an exemplary embodiment of the invention

To reconstruct the binocular or stereoscopic view of a single image, the first step is to define the source view point: in other words, to decide if the two final images (right and left) must be recreated from nothing having that source of reference, or if the source image is to be exactly one of the final images while only the other is to be reconstructed from it.

This decision may greatly influence the artefacts susceptible to be produced during application of the parallax value. In fact, during this phase the objects are reconstructed in a different position from the original one and this simultaneously causes three situations:

- two objects originally near each other move away from each other,
- two objects originally near each other remain in their original positions,
- two objects originally near each other are superimposed.

This movement is the direct function of the parallax value associated to the objects. Therefore the greater the parallax value, the greater possible artefacts introduced to the final image will be (greater distance or greater superimposition).

From this assumption, it is evident that the final choice is between dividing the problem of the artefacts between both final images or allowing the problem to be established on only one of the two images. In general, it may be thought that by dividing the problem into equal parts between the two images, it will be half visible on both images. It is also true that it is present constantly for the entire time. On the contrary, by leaving the problem on only one image, it is only present on the reconstructed image, but visible only for half of the time. Clearly between these two extremes, cases are also contemplated in which by distributing the parallax into different parts for each of the two final images, but so that the total quantity of parallax remains the same, the artefacts will be visible at different times with different persistence.

Normally, one may think that, as the initial two-dimensional image is a convergent projection of the three-dimensional environment, the first action is the one most suited for the final phase of reconstruction by means of applying the parallax. However this does not imply a restriction or differentiation of the conversion problem.

The present invention hereunder proposes a solution to limit visibility of the artefacts, not by using special functions to mask these but by variable modification of a reduction/enlargement factor of the depth perception inside the viewing device.

By way of an example, it is possible to establish that the most simple example of artefact susceptible to be generated in an image is a so-called "hole" or "gap", or a part of surface in which image information is not available. Although in its original form it is represented by a single dot or pixel, due to introduction of the parallax along the horizontal axis this form may be transformed into a segment and, as a result of processing along the vertical direction, this form may also be extended to an area. This area will have different dimensions and forms for each object and for each parallax value associated to it.

Whatever the choice adopted to generate stereoscopic images from monocular images it is necessary to calculate a parallax value to be applied.

To do so some initial elements must be available, such as:

- the dimension of the screen,
- the dimension of the image to be projected,
- the minimum distance of the user from the reproduction screen, and
- the depth of the objects.

The first two elements are useful in order to generate images with dimensions congruous with the device utilized for viewing.

The third element can be easily calculated having the first two elements and using the viewing specifications of the human eye.

For applications in which these values are not modified, it can be assumed that they will be fixed in the system simplifying the I/O and speeding up use during computation.

The fourth (namely the depth of the objects) is instead an essential element on which reconstruction of the three-dimensional environment from the two-dimensional projection is based. The present invention utilizes the concept of depth map for this purpose.

The depth map, in practice the link existing between two-dimensional and three-dimensional worlds (or what is sometimes defined two-and-a-half dimensions or 2D ½), is a mapping of the objects present in an image in relation to their spatial position.

This mapping may alternatively have two meanings.

The first identifies the exact correspondence of the space of each dot of the image, and in this case may be defined as depth map.

In the second case it is possible to define the distinction between objects present in the scene, without any correspondence with the direction of real depth. In this case, although in this regard the concept of depth map will be used hereunder without any distinction, it is more accurate to talk of disparity map.

The more the difference between the two maps tends to decrease, the more their meaning tends to overlap; for this reason figure 4 presents two possible examples of maps of this type.

This therefore requires the definition of a system in which, to reconstruct a three-dimensional environment, the processing system does not depend on the type of map, but only on the data contained in this.

Also taken into consideration within the system developed was the possibility of being able to vary the depth effect, according to the requests of a possible external user, so that viewing is comfortable with any depth map input.

In both cases, to provide an immediately understandable example, this is an image with different levels of grey in which each area reproduced with a specific level of grey (shown in figure 4 with different sectioning) identifies the positioning, within the extent of the image, of objects or of a group of objects t found in a certain distance range in relation to the observation point.

In the specific case, both images of figure 4 reproduce different depth maps of an image of a mountain panorama (essentially the view of a valley). The overall effect that can be deduced by observing the depth map is almost similar to the effect perceivable by observing a group of stage settings or by observing a mountain landscape at daybreak or dusk in conditions in which the reduced level of luminosity makes chromatic information difficult to perceive and, at the same time, the grazing illumination of the sun low on the horizon highlights the staggering, on various subsequent perspective planes, of the raised areas included in the landscape.

For clarity it is stressed that the present invention does not deal with the problem of generating the depth map of the image reproduced. It will thus be presumed that this map is in any case available hereunder in the present description.

When we observe the environment around us, it is evident that the geometrical forms of nearby objects and their relative distances are clearly visible, while this tends not to be the case for distant objects.

The phenomenon is linked to so-called depth perception and is inversely proportional to distance from the object in question. Therefore the problem is posed of how to correctly define a depth map that complies with this rule.

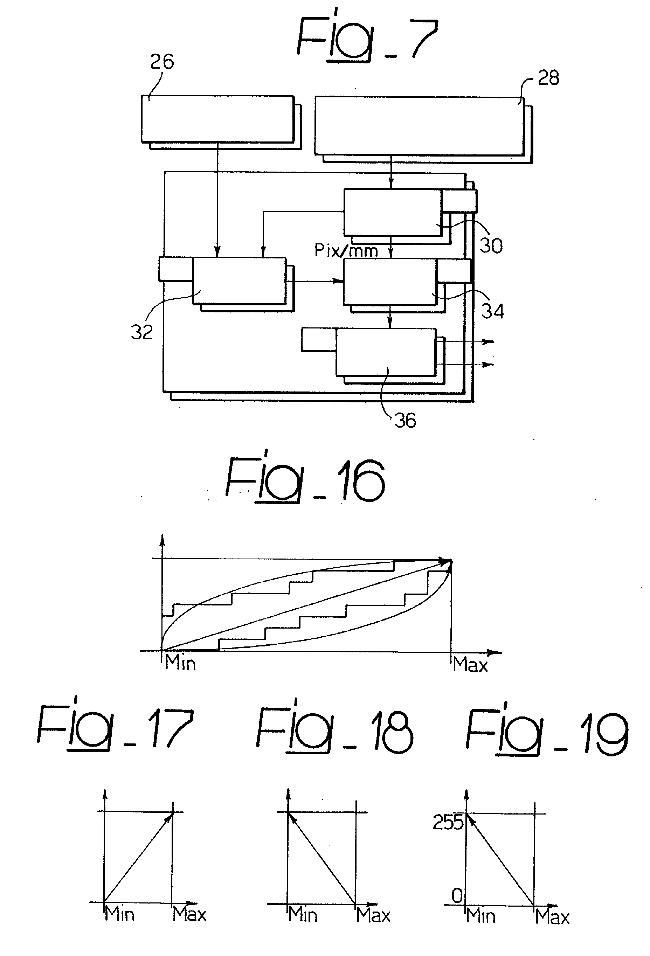

Figure 5 illustrates a typical effect of perception of three-dimensional or 3D space, identifying, on the one hand, equidistant levels of depth EL and the relative perception PER.

Figure 5 defines several levels of depth equidistant from one another, so that the initial rule is not violated. This also means that a real depth map can be emulated with an appropriate disparity map. In other words, even if we do not know the real three-dimensional position of the objects, but by judiciously distributing each object on different levels equidistant from one another, it is possible to generate -- a -- depth effect very similar to the real one: in this respect, it must again be mentioned that the object set by the solution according to the invention is to reconstruct three-dimensionality of the scene and not exactly the real one.

As already mentioned, a inherent phenomenon in generating a stereoscopic image from a monocular image is given by the formation of "holes" or "gaps", or groups of missing data of the reconstructed images caused by horizontal movement of the objects inside the image.

These holes relate to the unknown data that belong to the objects included in the observed scene, but of which nothing is known: colour, luminosity and so on. These holes must therefore be filled in some manner, also taking account of the fact that this filling process inevitably causes the introduction of some artefacts.

Therefore it is necessary to operate in an manner that makes these artefacts invisible.

As the problem is linked to the fact that areas for which there are no known data are discovered, these holes are not easy to fill and, when performing this task, care must be taken not to generate visible problems.

This task may be facilitated by analysis of the initial image in the temporal domain. As well as creating difficulties linked to the fact that temporal analysis of a sequence of images requires the memorization of a large number of images, this analysis might never reveal the original information that we are attempting to reconstruct. This is due, for example, to the fact that a certain object (or usually a certain portion of this) might never be visible during the entire sequence, irrespective of the number of images considered.

Moreover, it must be borne in mind that, at least in some applications, there is only one image available as the initial image.

These artefacts or holes are therefore a problem that require an adequate solution.

A technique that may be suggested to decrease the presence and/or visibility of these artefacts is one that, by limiting as much as possible a magnitude of the holes on the final images and maintaining the visual three-dimensional effect, fills or fills in these holes or gaps with the original information in the homologous positions.

There are also solutions in principle more effective than this. In general, however, these alternative techniques depend greatly on the final viewing technology.

Figure 6 illustrates in the form of a block diagram the architecture of a system for the reconstruction of a three-dimensional scene according to the criteria set forth above.

The aforesaid system, indicated as a whole with 10, comprises corresponding modules that perform the following functions:

- reading of the two-dimensional image (input module 12),
- reading of the depth map, generally provided from the outside (input module 14),
- pre-processing for calculation of the parallax from the image read in module 12 and from the depth map read in module 14 (the module for calculation of the parallax is indicated with 16),
- generation of the left view (module 18),
- generation of the right view (module 20),
- processing of the view generated in modules 18 and 20 by truncating the edges and solving the occlusions (module 22), and
- generation of the three-dimensional output image (module 24).

Module 12 is composed mainly of data memorizing structures (of the known kind) in which the two-dimensional images destined to be placed at the disposal of the other processing blocks present in the system are loaded. No general limits are set on the quantity of the images that can be loaded.

Hereunder in the present description reference will also be made, at least implicitly, to images that are acquired and processed in digital form. Those skilled in the art will in any case appreciate that the scope of the invention is in no way limited to this solution of acquisition and processing. The solution according to the invention in fact is suitable to be implemented, at least in principle, making use of techniques to acquire and process signals in which these signals maintain, at least in part, the features of an analogue signal, even if sampled.

A typical example of these processing methods is given by the techniques for processing images based on the use of neural networks which, for their matrix structure, are suitable to be coupled directly to image sensors which also have a matrix structure.

Module 14 implements acquisition of the depth map connected to the image or images input into the system through module 12. As already mentioned, the present invention does not specifically relate to the generation of the aforesaid depth map, which may be made available to the system described herein employing any prior art solution for this purpose. Clearly, the quantity of depth data loaded in module 14 must correspond to the quantity of source data loaded in module 12.

One of the parameters to be considered in three-dimensional reconstruction is correlation between the quantity of parallax to obtain the three-dimensional effect and the quantity of pixels corresponding to it.

As we saw in the introductory part of the present description, the parallax value as a function of the interocular distance must be converted into a specific quantity of pixels to move data horizontally to the right and left. It is therefore necessary to determine the correct conversion function that considers the two systems different to value the pixel/distance ratio (usually expressed in millimetres).

At the end of the processing chain, the images will be viewed on the dedicated screen, with a fixed dimension and fixed resolution. It may thus be assumed that, by observing the three-dimensional image with the full screen, the image must also have the same dimension and resolution as the video. If this is not the case, the final image must be processed (according to prior art which does not require to be described herein) so that it is then aligned with these values.

Nonetheless, by assuming full screen viewing, it is possible to easily assess the pixels/millimetres ratio with the following ratio:

$$\text{Pixel/mm} = (X_{px} \cdot Y_{px}) / (W_{mm} \cdot H_{mm})$$

where the input image has [X:Y] pixels and where the final screen has the dimensions [W:H].

The correct value for identification of the pixels/millimetres ratio is expressed extremely well in the function viewed above.

In view of the fact that the parallax is only effective in the horizontal dimension (we are obviously talking of an image observed horizontally, considering in fact the eyes of the observer aligned on a horizontal axis), it is possible to simplify the aforesaid function as follows:

$$\text{pixel/mm} = X_{px}/W_{mm}$$

To obtain the three-dimensional effect, the original pixel and its replica must be moved (horizontally) by a quantity defined by the parallax value to be applied.

In particular, to obtain uniform distribution of the depth effect (see the considerations above in relation to the depth perception), it is necessary to determine the range of values that can be taken by the parallax by calculating its minimum and maximum value.

These values are expressed unequivocally and irrespective of the viewing technology: therefore, for example, in millimetres. As these movements must be viewed, they can be transformed into units of measurement relative to the image, that is the number of pixels.

To do so the pixel to millimetre ratio previously calculated must be known.

The diagram in figure 7 illustrates, in the form of a functional block diagram, the criteria used to calculate the final parallax.

In particular, in the diagram of figure 7 references 26 and 28 illustrate the data (which can be seen as data files) containing the information relative to the interocular distance and the decrease in depth (file 26) and the image length, the image width and the diagonal dimension of the video (file 28).

The block 30 represents the functional module which determines the distance and resolution, in particular generating the information relative to the minimum user-screen distance (intended as the minimum distance at which the image is viewed on the screen comfortably for the human vision system, distances greater than this minimum value increase the comfort of viewing but give increasingly less depth perception) and the pixels/millimetres ratio seen previously.

From the information on the minimum user-screen distance, a module indicated with 32 calculates, on the basis of the data contained in file 26, the parallax, intended as maximum parallax.

The block 34 indicates the module destined to act as parallax motor destined to feed towards a module acting as movement motor, indicated with 36, the movement information (right left) relative to the parallax. On the basis of this information, the module 36 generates the left image LI and the right image RI destined to be sent to modules 18 and 20 of figure 6.

The block or module 30 assesses two important parameters: the minimum distance recommended to the user to view the screen in comfort and the resolution of the image as pixel/millimetre ratio.

The distance D of the user from the screen S is a function of the maximum aperture of the eye of the diagonal dimension of the video. Its value indicates the threshold below which the observer cannot view the images comfortably. Clearly, by increasing the diagonal dimension of the video the value of D increases consequently. Block or module 32 assesses the maximum parallax value M that can be obtained in relation to the interocular distance, indicated with B, and to the depth effect desired (F(D)).

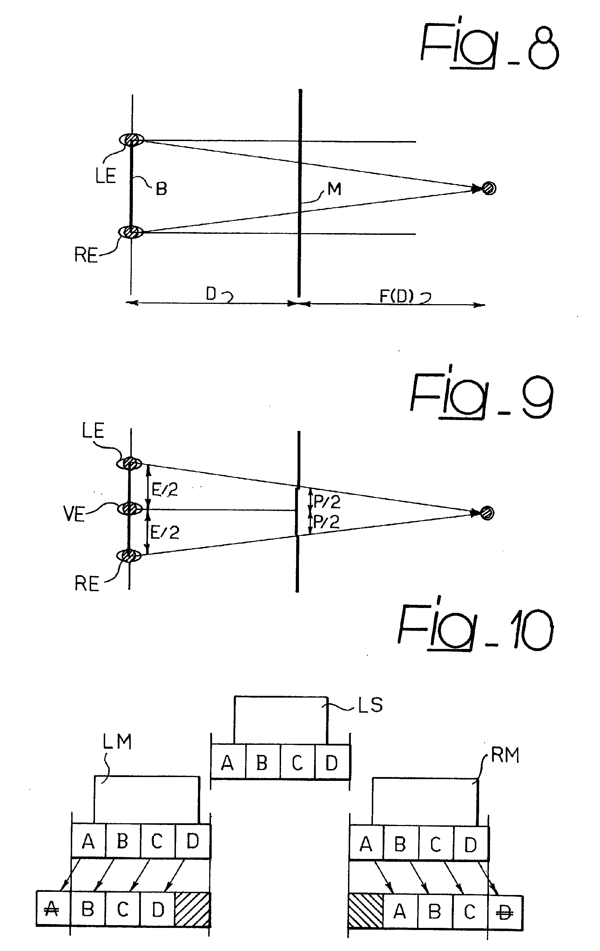

This occurs on the basis of the geometry represented in figure 8, where once again the references LE and RE indicate the left eye and the right eye, respectively.

Block 34 performs transformation of the parallax from millimetres to number of pixels taking account of the pixel/millimetre ratio calculated previously. As a result it is possible to know exactly how much the source pixel must be moved to the right or left according to the relations

$$parallax_{pixel} = ratio.parallax_{millmeter}$$

$$parallax_{pixel} = \#pixel_{pixel}.prallax_{millimeter}/I_{millimeter}$$

Block 36 is instead the true movement motor, which must take account of the distribution of the total parallax value.

Consequent to the considerations above, or by dividing the creation of the right and left image in two, the parallax value must also be divided into two parts. Each of these parts generally corresponds to a fraction of the overall movement and can therefore be either extremely different from or equal to each other (for example, by being equal to half of the overall movement).

This takes place according to criteria schematically represented in figure 9, corresponding in practice to the definition of a sort of virtual eye VE in the intermediate position between the left eye LE and the right eye RE.

In particular, it is possible to recreate the two images even in a manner that is not equidistant for right and left.

The following solutions are therefore possible, for example:

CASE 1:

    source image or SOURCE = RIGHT
    new image or NEW = LEFT

CASE 2:

    SOURCE/2 = RIGHT
    SOURCE/2 = LEFT

CASE 3:

In general

    SOURCE/A = RIGHT
    SOURCE/B = LEFT

In such a way that (L/A + R/B) = 1 with A and B both equal to and different from each other.

As soon as the parallax value of all the pixels of the image has been assessed, all the elements to generate binocular vision are available.

As long as the final destination of the pixel falls within the space identified by the image there are no particular problems. However, as soon as this goes beyond the dimensions pre-established by the screen controls, this causes ambiguity that must be solved.

In particular, by assuming that we have an identical parallax value for all the pixels belonging to the same line, in the final image some of these no longer exist and some positions are not covered by any original pixel.

This situation can be observed directly in figure 10, where, in relation to a source line LS, it is possible to observe the effect of a movement to the left LM and a movement to the right RM, respectively.

In practice, it can be observed that in both cases a pixel in the end position of the line is taken out of the screen, while a hole is created corresponding to the internal end.

In the final image, in addition to holes or gaps inside the image, a black edge is also present due to the lack of information to enter in the corresponding lateral bands. The dimension of this edge depends principally on the parallax. In particular, it depends on the maximum parallax value of those pixels that do not fall inside the image.

Nonetheless, the dimension of the edges that remain blacked does not depend on the value of the maximum parallax applied to the image, but on the maximum parallax that the pixels may have. In other words, the maximum parallax defines the extent of the maximum depth effect of the screen. However, if no pixel has a value corresponding to the depth map, this value will never be reached. Therefore, there is a direct and proportional dependence with the content of the depth map.

Returning to the phase to apply the parallax value of the pixels and extending the possibility of having different parallax values for adjacent pixels belonging to the same line or row of the video, or in the boundary regions between two portions of image with different depth and therefore parallax values, there may be cases in which different parallax values cause the lack of data with which to fill this distance.

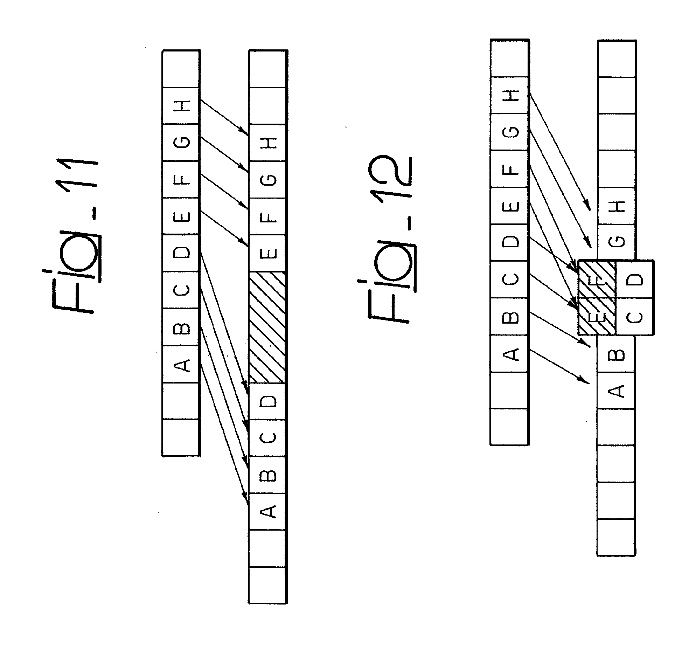

Figure 11 illustrates an example in which, after a left movement, it is no longer possible to establish and state with certainty which values the pixels to the right of D and to the left of E must have.

There are different ways of reducing these problems: for example, as already mentioned, it is possible to use the original information in the homologous positions of the original image. However, the larger the space defined by the hole or gap, the more difficult it is to reconstruct it correctly with no more information than that already considered. On the contrary, the smaller the empty space, the less the three-dimensional effect introduced will be.

An opposite situation is found when the parallax values cause superimposition between original pixels, requiring the introduction of a function to control the forward-backward relation on the basis of the parallax value in question. This situation is represented, again with reference to left movement, in figure 12.

The aforesaid function can be described and implemented simply with reference to perspective geometry, thanks to which it is known that the greater the parallax, the greater the distance the relative point is from the observer and therefore as these points cannot be visible they must be darkened by those with least parallax in homologous positions. Consequently, for this assumption to remain valid it is necessary to ensure that it is complied with in these cases in which superimposition is found.

Hereunder a solution is illustrated to calculate the parallax to apply for each original pixel of the image.

The relative assumptions must be based on the following elements: image resolution, distance of the observer from the screen, screen dimension and interocular distance of the observer.

Added to these elements is the depth map associated to the source. As has already been seen, the depth map forms the connection between the two-dimensional source at the three-dimensional output.

Moreover, given an initial image a single depth map does not exist, meaning that, given a certain initial image, it is possible to reconstruct different, virtually infinite, three-dimensional effects.

Clearly, the greater the number of levels, the greater the effect that can be reconstructed will be. However, it is also true that, having a high number of levels available, but requiring a limited three-dimensional effect, these effects tend to collapse into themselves, so to speak, returning the solution to the initial point.

Moreover, the fact that the distinction between depth and disparity map has been defined is important in order to reconstruct a three-dimensional effect irrespective of this fact.

In relation to the number of depth levels available, it can be noted that, by assuming we have a map drawn at grey level on, for example, 8 bits, up to 256 levels are available. This number may be excessive to describe, for example, an indoor scene, while on the other hand it may not be sufficient for a panoramic scene.

However, in this regard it must again be mentioned that the object sought here is not to reconstruct the natural three-dimensional effect, but to manage a three-dimensional effect, capable of managing all types of map, thus capable of manipulating the three-dimensional effect as required: this feature is of particular importance, for example, in entertainment applications or medical and scientific applications.

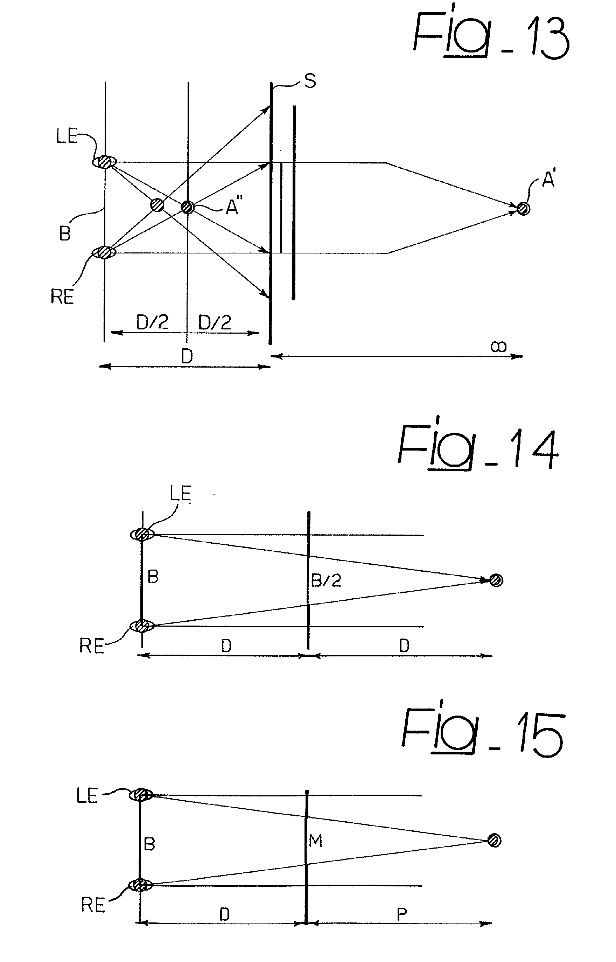

In this respect, with reference to figure 13 in which, once again, the references LE and RE indicate the left eye and right eye, respectively, separated by the interocular distance B.

The value of the parallax can be seen as a function of the interocular distance B. This is mainly true when it is asserted that the parallax cannot be greater than B in the cases in which:

- a point A' is found in the space between the projection plane S and infinity, and
- a point A" is found between the projection plane and half the distance between this plane and the observer, the two cases represented in figure 13 representing limit positions of these conditions.

More generally, whatever the position of the point inside the space defined above, as the human viewing system is originally convergent, this maximum parallax equal to B should never be reached.

By now dividing the system between observer-screen distance and screen-background of the screen distance, it can be stated that by fixing these two values, it is possible to obtain the maximum quantity of parallax applied.

Assuming we define these quantities as identical, it can be obtained that the maximum parallax is equal to half of the interocular distance, thus defining a convergent vision more comfortable for the human eye in the conditions represented in figure 14.

Generalizing, a variable distance can be defined, with a minimum value equal to D, at which the observer must be positioned from the screen S, while it is possible to define the depth inside the screen as variable.

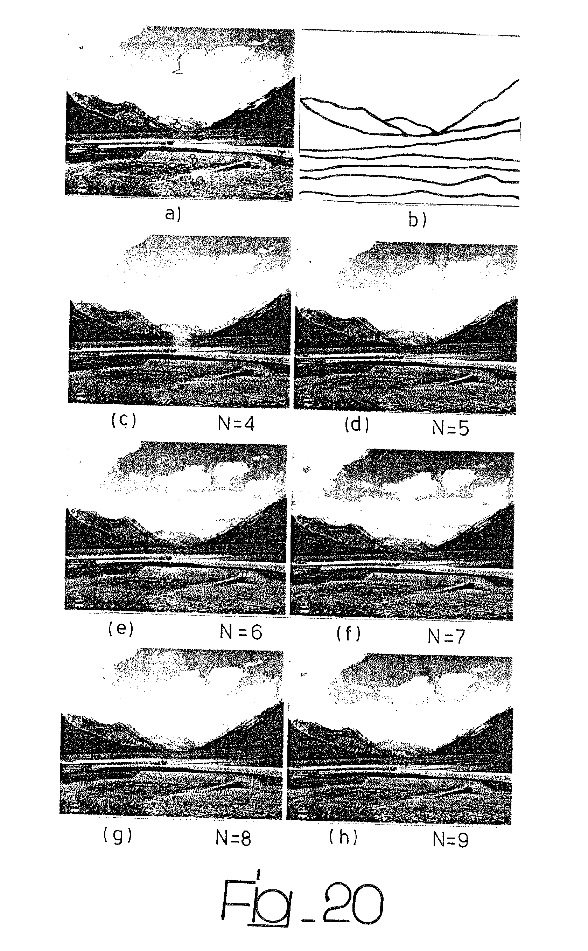

Considering a system in which this depth, indicated with P, is equal to the value of the depth effect according to the diagram in figure 15 and exploiting the relation between similar triangles it follows that:

$$B: (D+P) = M:P \qquad (5)$$

where:

- M is the maximum parallax
- B is the interocular distance
- P is the depth inside the screen, and
- D is the minimum distance of the observer from the screen.

From the relation (5), the depth of the screen can be calculated as follows:

$$M = (B.P) / (D+P) \qquad (6)$$

The next step is to define the best scale function to associate to each value of the depth map the corresponding parallax value M to be associated to each pixel.

The area in which this function must be applied is limited to the relation definable as "minimum parallax to the nearest objects and maximum parallax to those farthest away".

The function that seems most reasonable considering the concept of depth perception, is the increasing monotone linear function which connects the two ends of the area of application according to the criteria represented in figure 16 in which the axis of the abscissas represents a parallax value between a minimum value Min and a maximum value Max and the scale of the ordinates corresponds to an ideal depth measurement between a minimum value, corresponding to 0 of the relative scale of the ordinates, and a "far" value corresponding to the top end of the area of application of the aforesaid function.

As is shown in figure 16, the maximum parallax is associated to the objects furthest away, while the minimum parallax is associated to those nearest.

It therefore becomes necessary to associate the value inside a depth map with the relative parallax, or better to define which of the two situations represented in figures 17 and 18 correspond to the case in question.

In actual fact, the problem is easy to solve, as irrespective of how the depth map associates the values of grey to the three-dimensional distance, it must be possible not to make the error, which in these cases means reconstructing each three-dimensionality backwards. From the figures of the map and the concept that this map has been defined with levels of grey (for example from 0 to 255, or on 8 bits), it follows that the function to be implemented is the one represented in figure 19, where the scale of the ordinates represents the levels of grey.

It must still be defined where to make the maximum and minimum parallaxes correspond in relation to the viewing system. For simplicity and without detriment to all generalization, it is possible to establish that the zero parallax corresponds to the viewing screen, while the maximum parallax coincides with the background of the system.

In general, the experiences conducted by the Applicant show that it is not advantageous to introduce negative parallaxes as if a negative parallax were to be associated to objects which, being positioned partly outside the viewing screen (for example, new objects entering the main scene) are not completely visible, these would jump out of the screen, and thus be incomplete and not comfortably observable.

It is thus possible to easily define the effect of distance between the screen and the background on the basis of simple relations.

For example, considering figure 19, it is possible to write the linear function that defines the parallax as a function of the maximum parallax M and the depth value as follows:

$$\text{parallax} = M.(1\text{-depth value}/255) \qquad (7)$$

and using the relation (6) set forth above the following is obtained:

$$\text{parallax} = B.P/(D+P) . (1\text{-depth value}/255) \qquad (8)$$

Therefore by defining a function for which the maximum parallax is equal to:

$$M = B/N \text{ with } N \text{ equal to } 2, 3, ... \qquad (9)$$

where N is the reduction factor, we can obtain:

$$P = D/(N-1) \text{ with } N \text{ equal to } 2, 3, ... \qquad (10)$$

or a direct relation between the distance of the user from the screen and the depth effect inside the screen.

The minimum value for N is 2 as a higher parallax value is not possible. Therefore the maximum parallax and the depth of the screen are made to depend on the reduction value N. A reference value of N to obtain comfortable three-dimensional vision can be obtained through experimental tests.

Bearing in mind the relation (7) already seen above and using the relation (9) set forth above we can finally obtain:

$$\text{parallax} = (B/N).(1\text{-depth value}/255) \qquad (11)$$

In this way the variability of the depth effect is connected to the programmable reduction factor N of the three-dimensional effect desired. The value N has a fundamental role in creating the occlusions in the construction process of the two right and left images so that as N decreases there is an increase in the magnitude of the holes between originally adjacent objects and an increase in the dimension of the lateral edge of the image that is blacked.

Figure 20 indicates various possible results of three-dimensional reconstruction of an original image a) from a depth map indicated with b).

In particular, the images indicated with c) to h) correspond to respective anaglyphs for N=4, N=5, N=6, N=7, N=8, N=9.

Obviously, the lower the value of N, the greater the maximum parallax is, causing less comfortable three-dimensional vision of the anaglyph. It is obvious that, as a function of the application, it is possible to choose a correct compromise between the value of N and a comfortable three-dimensional vision, in particular as regards the non-perception of holes and gaps.

Naturally, without detriment to the principle of the invention, the details of embodiment and the forms of implementation may be widely varied in relation to the description and illustration provided herein, without however departing from the scope of the invention as defined in the appended claims.

**Claims**

1. A process for generating, from at least one monocular image (a), at least one image with stereoscopic effect (c to h), **characterized in that** it comprises the operations of:

   - providing a depth map (b) of said monocular image (a), which defines a mapping of the objects present in the monocular image (a) relative to their spatial position in the direction of depth in relation to the monocular image,
   - determining, for the pixels included in said monocular image (a) and as a function of said depth map (b), the respective parallax values indicative of a quantity of movement for each pixel to obtain at least a stereoscopic effect (c to h) in relation to said monocular image (A),
   - applying to the pixels of said monocular image (a) a movement corresponding to said quantity of movement so as to generate, through the effect of said movement, at least one image with stereoscopic effect.

2. Process according to claim 1, **characterized in that**, as a result of said movement of pixels, said image with stereoscopic effect (c to h) is susceptible to contain superimposed areas between moved pixels and **in that** the procedure comprises the operation of eliminating (22) from said image with stereoscopic effect (c to h) the superimposed areas maintaining, between superimposed pixels, the pixels with least parallax.

3. Process according to claim 1 or claim 2, **characterized in that**, as the result of said movement of pixels, said image with stereoscopic effect (c to h) is susceptible to present gaps corresponding to a lateral edge of the image and **in that** the procedure comprises the operation to mask (22) said lateral edge.

4. Process according to any of the claims from 1 to 3, **characterized in that**, as the result of said movement of pixels, said image with stereoscopic effect (c to h) is susceptible to present gaps between objects included in said image and **in that** the procedure comprises the operation to fill in said gaps with information obtained from pixels located in the homologous and/or nearby positions in said monocular image (a).

5. Process according to any of the claims from 1 to 3, **characterized in that**, as the result of said movement of pixels, said image with stereoscopic effect (c to h) is susceptible to present gaps between objects included in said image and **in that** the procedure comprises the operation to maintain, at least in part, in said image with stereoscopic effect said gaps between objects included in said image with stereoscopic effect.

6. Process according to any of the preceding claims, **characterized in that** it includes the operation to allocate to said pixels of said monocular image (a) respective parallax values obtained from a maximum parallax value (M) as a function of a weighting rule.

7. Process according to claim 6, **characterized in that** said weighting function is a scalar function.

8. Process according to claim 6, **characterized in that** said weighting function follows a linear weighting rule.

9. Process according to any of the preceding claims, **characterized in that** it comprises the operation of allocated to said pixels of said monocular image (a) parallax values linked to a maximum parallax value (M) determined as a function of the interocular distance (B).

10. Process according to any one of the preceding claims, **characterized in that** it comprises the operation to allocate to said pixels of said monocular image (a) parallax values linked to a maximum parallax value (M) determined as a function of the positioning (P) of the respective object in the sense of depth within the extent of said monocular image as a function of said depth map.

11. Process according to any of the preceding claims, **characterized in that** it comprises the operation to allocate to said pixels of said monocular image (a) parallax values linked to a maximum parallax value (M) determined as a function of a parameter of minimum observation distance (D) of said monocular image with stereoscopic effect.

12. Process according to claims 9, 10 and 11, **characterized in that** said maximum parallax value (M) is determined on the basis of the relation:

$$M = (B.P) / (D+P)$$

   where:

- M is said maximum parallax value,
- B is the interocular distance,
- P is said positioning of the respective object in the direction of depth, and
- D is said parameter of minimum observation distance.

13. Process according to any one of the preceding claims, **characterized in that** it comprises the operation to allocate to said pixels of said monocular image (a) parallax values linked to a maximum parallax value (M) determined on the basis of a relation of the type:

$$M = B/N,$$

where

- B is the interocular distance, and
- N is a reduction factor.

14. Process according to claim 5 and claim 13, **characterized in that** it comprises the operation to selectively determine said reduction factor (N) so as to minimize the incidence of said gaps in information between adjacent objects present in said image with stereoscopic effect.

15. Process according to claim 1 or claim 14, **characterized in that** it comprises the operation to generate said at least one image with stereoscopic effect in the form of anaglyph (c to h).

16. Process according to any one of the preceding claims, **characterized in that** it comprises the operation to generate a pair of said images with stereoscopic effect, applying said respective quantity of movement of the pixels of said monocular image (a) when generating only one of said images with stereoscopic effect.

17. Process according to any of the claims from 1 to 15, **characterized in that** it comprises the operation to generate a pair of said images with stereoscopic effect, applying to said pixels of said monocular image (a) respective movements correlated to said quantity of movement when generating both of said images with stereoscopic effect.

18. Process according to claim 17, **characterized in that** it comprises the operation to apply to said pixels of said monocular image, when generating said two images with stereoscopic effect, respective movements equal to fractions (A, B) of said quantity of movement.

19. Process according to any one of the preceding claims, **characterized in that** it comprises the operation to determine said parallax values in terms of absolute distance and then convert said absolute distance into a value of number of pixels as a function of the resolution desired in said image with stereoscopic effect.

20. Process according to any one of the preceding claims, **characterized in that** said monocular image and said image with stereoscopic effect have a common horizontal direction and **in that** said respective quantity of movement is applied to the pixels exclusively in said common horizontal direction.

21. A system for generating, from at least one monocular image (a), at least one image with stereoscopic effect (c to h), **characterized in that** it comprises:

- at least one input module (12, 14)) configured to read said monocular image (a) and a depth map (b) of said monocular image (a), said depth map (b) defining a mapping of the objects present in said monocular image (a) relative to their spatial position in the direction of depth in relation to said monocular image,
- a processing module (16) to determine, for the pixels included in said monocular image (a), and as a function of said depth map (b), respective parallax values indicative of a respective quantity of movement by which each pixel must be moved in said image with stereoscopic effect (c to h) in relation to said monocular image (a), said processing module (16) applying to the pixels of said monocular image (a) a movement corresponding to said respective quantity so as to generate, through the effect of said movement, said image (18, 20, 24) with stereoscopic effect.

22. System according to claim 21, **characterized in that**, as the result of said movement of pixels, said image with stereoscopic effect (c to h) is susceptible to contain superimposed areas between moved pixels and **in that** the system comprises a further processing module (22) configured to eliminate from said image with stereoscopic effect (c to h) said superimposed areas maintaining, between the superimposed pixels, the pixels with least parallax.

23. System according to claim 21 or claim 22, **characterized in that**, as a result of said movement of pixels, said image with stereoscopic effect (c to h) is susceptible to present gaps corresponding to a lateral edge of the image and **in that** the system comprises a further processing module (22) configured to mask (22) said lateral edge.

24. System according to any one of the claims from 21 to 23, **characterized in that**, as a result of said movement of pixels, said image with stereoscopic effect (c to h) is susceptible to present gaps between objects included in said image and **in that** the system comprises another processing module (22) configured to fill in said gaps with information obtained from the pixels situated in the homologous positions in said monocular image (a).

25. System according to any of the claims from 21 to 23, **characterized in that**, as a result of said movement of pixels, said image with stereoscopic effect (c to h) is susceptible to present gaps between objects included in said image and **in that** the system comprises another processing module (22) configured to maintain, at least in part, in said image with stereoscopic effect said gaps with information obtained from the pixels situated in the homologous positions in said monocular image (a).

26. System according to any of the preceding claims 21 to 25, **characterized in that** said processing module (16) is configured to allocate to said pixels of said monocular image (a) respective parallax values obtained from a maximum parallax value (M) as a function of a weighting rule.

27. System according to claim 26, **characterized in that** said processing module (16) is configured to apply, as said weighting function, a scalar function.

28. System according to claim 26, **characterized in that** said processing module (16) is configured to apply said weighting function following a linear weighting rule.

29. System according to any one of the preceding claims 21 to 28, **characterized in that** said processing module (16) is configured to allocate to said pixels of said monocular image (a) parallax values linked to a maximum parallax value (M) determined as a function of the interocular distance (B).

30. System according to any one of the preceding claims 21 to 29, **characterized in that** said processing module (16) is configured to allocate to said pixels of said monocular image (a) parallax values linked to a maximum parallax value (M) determined as a function of the positioning (P) of the respective object in the direction of depth of the extent of said monocular image as a function of said depth map.

31. System according to any one of the preceding claims 21 to 30, **characterized in that** said processing module (16) is configured to allocate to said pixels of said monocular image (a) parallax values linked to a maximum parallax value (M) determined as a function of a parameter of minimum observation distance (D) of said image with stereoscopic effect.

32. System according to claims 29, 30 and 31, **characterized in that** said processing module (16) is configured to determine said maximum parallax value (M) on the basis of the relation:

$$M = (B.P) / (D+P)$$

where:

- M is said maximum parallax value,
- B is the interocular distance,
- P is said positioning of the respective object in the direction of depth, and
- D is said parameter of minimum observation distance.

33. System according to any one of the preceding claims from 21 to 32, **characterized in that** said processing module (16) is configured to allocate to said pixels of said monocular image (a) parallax values linked to a maximum parallax value (M) determined on the basis of a relation of the type:

$$M = B/N,$$

where

- B is the interocular distance, and
- N is a reduction factor.

34. System according to claim 25 and to claim 33, **characterized in that** said processing module (16) is configured to selectively determine said reduction factor (N) so as to minimize the incidence of said gaps in information between adjacent objects present at least in said image with stereoscopic effect.

35. System according to claim 21 or claim 34, **characterized in that** said processing module (16) is configured to generate said at least one image with stereoscopic effect in the form of anaglyph (c to h).

36. System according to any one of the preceding claims from 21 to 35, **characterized in that** said processing module (16) is configured to generate a pair (18, 20) of said images with stereoscopic effect, applying said respective quantity of movement of the pixels of said monocular image (a) when generating only one of said images with stereoscopic effect.

**37.** System according to any one of the preceding claims from 21 to 35, **characterized in that** said processing module (16) is configured to generate a pair of said images with stereoscopic effect (18, 20), applying to said pixels of said at least one monocular image (a) respective movements correlated to said quantity of movement when generating both of said images with stereoscopic effect.

**38.** System according to claim 37, **characterized in that** said processing module (16) is configured apply to the pixels of said at least one monocular image (a), when generating said two images with stereoscopic effect (18, 20), respective movements equal to fractions (A, B) of said quantity of movement.

**39.** System according to any one of the preceding claims from 21 to 38, **characterized in that** said processing module (16) is configured to determine said parallax values in terms of absolute distance and to then convert said absolute distance into a value of number of pixels as a function of the resolution desired in said image with stereoscopic effect.

**40.** System according to any one of the preceding claims from 21 to 39, **characterized in that** said monocular image and said image with stereoscopic effect have a common horizontal direction and **in that** said processing module (16) is configured to apply to the pixels of said monocular image (a) said respective quantity of movement exclusively in said common horizontal direction.

Fig. 1

Fig. 2

Fig. 3

# Fig_4

a)

b)

# Fig_5

PER

EL

3D

# Fig_6

# Fig _7

26

28

Pix/mm

30

32

34

36

# Fig _16

Min

Max

# Fig _17

# Fig _18

# Fig _19

Min    Max

Min    Max

255

0

Min    Max

_Fig_ 8

_Fig_ 9

_Fig_ 10

Fig_11

Fig_12

Fig_13

Fig_14

Fig_15

a)

b)

(c)      N=4      (d)      N=5

(e)      N=6      (f)      N=7

(g)      N=8      (h)      N=9

Fig_20

## EUROPEAN SEARCH REPORT

**Application Number**

EP 02 42 5218

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 929 859 A (MEIJERS PATRICK F P) 27 July 1999 (1999-07-27) * column 6, line 16 - column 8, line 62; figures 1,2A,2B * * column 8, line 63 - column 9, line 43; figures 3A,3B,4A,4B * --- | 1-40 | H04N13/00 |
| A | US 6 031 538 A (DUSSEUX JEAN-CHRISTOPHE ET AL) 29 February 2000 (2000-02-29) ----- | | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 5 September 2002 | De Paepe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 42 5218

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2002

| Patent document cited in search report | | Publication date | Patent family member(s) | | Publication date |
|---|---|---|---|---|---|
| US 5929859 | A | 27-07-1999 | DE | 69621778 D1 | 18-07-2002 |
| | | | EP | 0809913 A2 | 03-12-1997 |
| | | | WO | 9723097 A2 | 26-06-1997 |
| | | | JP | 11501188 T | 26-01-1999 |
| | | | TW | 382093 B | 11-02-2000 |
| US 6031538 | A | 29-02-2000 | FR | 2724033 A1 | 01-03-1996 |
| | | | CN | 1150848 A | 28-05-1997 |
| | | | DE | 69515287 D1 | 06-04-2000 |
| | | | DE | 69515287 T2 | 21-09-2000 |
| | | | EP | 0725957 A1 | 14-08-1996 |
| | | | ES | 2146765 T3 | 16-08-2000 |
| | | | WO | 9607162 A1 | 07-03-1996 |
| | | | JP | 10508396 T | 18-08-1998 |